# EUROPÄISCHE PATENTANMELDUNG

(11) **EP 2 144 052 A1**
(43) Veröffentlichungstag der Anmeldung: **13.01.2010**
(21) Anmeldenummer: 08012619.6
(22) Anmeldetag: 11.07.2008
(51) Int. Cl.: G01N 21/896, G01N 21/89

(54) **Verfahren und Vorrichtung zum Detektieren und Klassifizieren von Defekten**

(71) Anmelder: Dr. Schenk GmbH Industriemesstechnik, 82152 Planegg/Martinsried (DE)
(72) Erfinder: Vetter, Erich, München 81475 (DE); Wick, Manfred, Theo, Germering 82110 (DE)
(74) Vertreter: Manitz, Finsterwald & Partner GbR

(57) **Zusammenfassung**

Die Erfindung betrifft ein Verfahren zum Detektieren und Klassifizieren eines Defekts in einem Detektionsbereich eines zu untersuchenden Gegenstandes, z.B. eines Bahnmaterials, bei dem mittels einer optischen Hellfeldanordnung ein Hellfeldbild und mittels einer Dunkelfeldanordnung ein Dunkelfeldbild des Detektionsbereichs aufgenommen werden, ein Auswertungsbild des Detektionsbereichs durch Überlagerung des Hellfeldbildes und des Dunkelfeldbildes erzeugt wird, ein Defekt des Gegenstandes in dem Auswertungsbild ermittelt wird und der Defekt anhand seiner Erscheinung in dem Auswertungsbild mindestens einer vorbestimmten Defektklasse zugeordnet wird. Die Erfindung betrifft auch eine Vorrichtung zur Detektion und Klassifikation eines Defekts in einem Detektionsbereich eines zu untersuchenden Gegenstandes.

## Beschreibung

Die vorliegende Erfindung betrifft ein Verfahren und eine Vorrichtung zum Detektieren und Klassifizieren von lokalen Fehlstellen und geometrischen Strukturabweichungen in einem Detektionsbereich eines zu untersuchenden Gegenstandes, insbesondere eines Endlos-Bahnmaterials, wie z.B. eines Glasbandes oder einer Kunststofffolie, eines Plattenmaterials, wie z.B. einer Flachbildschirmfrontplatte oder einem Papierblatt, eines Stückguts, wie z.B. eines Kartons oder einer optischen Linse, oder allgemein einer Oberfläche, eines Materials oder einer Beschichtung, wie z.B. einer Lackschicht auf einer Oberfläche.

Lokale Fehlstellen, d.h. lokale Abweichungen der Homogenität, können beispielsweise unerwünschte Blasen und Einschlüsse in Folien, Kratzer oder Farbfehler auf Oberflächen, sowie Dichteschwankungen oder Spannungen in Gläsern sein.

Geometrische Strukturabweichungen umfassen beispielsweise abgeplatzte Kanten an Glasplatten, Musterfehler bei Aufdrucken, Schichtdickenschwankungen bei Beschichtungen oder auch Fehlbestückungen.

Unerwünschte lokale Fehlstellen, geometrische Strukturabweichungen oder ganz allgemein Abweichungen von den Normvorgaben an einem Objekt werden im Folgenden kurz als Defekte bezeichnet.

Optische Verfahren und Vorrichtungen zur Detektion eines Defekts sind in der industriellen Fertigung grundsätzlich bekannt.

Beispielsweise lassen sich Verunreinigungen, wie z.B. Platineinlagerungen, und/oder Einschlüsse, wie z.B. kleinere Blasen oder Steine, in einem Glasband mittels einer diffusen Hellfeldbeleuchtung detektieren. Bekannt ist es auch, lichtablenkende Defekte in einem Glasband, z.B. Verformungen der Oberfläche des Glasbandes, wie sie durch größere Blasen hervorgerufen werden können, mit Hilfe einer Hellfeldanordnung zu erfassen, welche eine gerichtete Lichtquelle und eine einer Kamera vorgelagerte Blendenanordnung aufweist.

Dunkelfeldanordnungen werden beispielsweise zum Nachweis stark diffus streuender Einschlüsse oder lokaler Oberflächenstrukturen, wie z.B. Kratzern und Kanten, genutzt.

Der Erfindung liegt die Aufgabe zugrunde, ein Verfahren und eine Vorrichtung zu schaffen, welches bzw. welche eine zuverlässigere Detektion und Klassifikation von Defekten ermöglicht.

Zur Lösung der Aufgabe sind ein Verfahren und eine Vorrichtung zum Detektieren und Klassifizieren eines Defekts in einem Detektionsbereich eines zu untersuchenden Gegenstandes gemäß den unabhängigen Ansprüchen vorgesehen.

Grundsätzlich liegt der automatisierten Inspektion eines Gegenstandes, d.h. der Prüfung eines Gegenstandes mit einer nachfolgenden Bewertung, im Allgemeinen in Form einer Gut-Schlecht-Entscheidung, ein hochkomplexer Ablauf zugrunde.

So wird der Gegenstand hierzu zunächst mittels einer geeigneten Vorrichtung untersucht. Die bei der Untersuchung auftretenden Signale werden auf geeignete Weise aufgenommen, gefiltert, sortiert, komprimiert und/oder formatiert.

Anschließend wird eine Signalereignisanalyse durchgeführt, bei welcher definierte lokale Signalereignisse, d.h. also Merkmale, wie z.B. eine Schwellenwertüberschreitung oder eine Kombination von Einzelsignalen oder Signalstrukturen, ermittelt und in geeigneter Form katalogisiert werden, d.h. ihre Parameter, wie z.B. Zeitpunkt und Ort des Auftretens, die Signalform und Signalstärke werden inventarisiert und zwischengespeichert. Diese strukturiert zusammengefasste Gesamtheit an Informationen bzw. Merkmalen über ein einzelnes Signalereignis wird kurz Einzelereignis genannt.

Die Aufgabe der auf die Signalereignisanalyse folgenden Klassifikation besteht darin, aus den spezifischen Signalmustern der katalogisierten Einzelereignisse nach festgelegten Regeln eine Sortierung der Einzelereignisse oder von Gruppen von Einzelereignissen in vordefinierte Ereignisklassen durchzuführen.

Eine wichtige und immer vorhandene Ereignisklasse bildet dabei die Klasse "kein Defekt". Weitere Klassen können die Klassen "Defekttyp I", "Defekttyp II", etc. umfassen.

Für jede dieser Klassen muss zumindest ein eineindeutiges Unterscheidungskriterium oder eine geeignete Kombination von Kriterien vorhanden sein, um eine eineindeutige Klassifikation zu ermöglichen.

Diese Sortierung bzw. Klassifikation ist anwenderseitig definiert und beruht im Allgemeinen nicht nur auf einer typspezifischen Einordnung der Signalquelle, wie z.B. einer Einordnung nach Gasblase, Partikel, Staub, einer Über- oder Unterschreitung einer Schichtdicke oder auch eines Farbfehlers, sondern auch auf einer Vorgabe von Bereichen, Variationen, Ausrichtung, Momenten, Streuung und/oder Grenzwerten.

Ein Defekt ist definiert als eine Ereignisfolge genau spezifizierter Signalmerkmale, die mit Hilfe von vorgegebenen Regeln und Filtern sortiert und klassifiziert wurden.

Die Klassifikation eines Defekts in eine Klasse ist somit also das Ergebnis einer Kombination der physikalischen Merkmale des Defekts, der Inspektionsaufgabe und der eingesetzten Inspektionsanlage.

Ein gesuchter Defekt ist letztlich durch die Anforderung an ein Produkt, das verwendete Material, die Art der Fertigung und die Fertigungsumgebung gegeben. So ergeben sich beispielsweise für einen Halbleiterbaustein, ein TFT-Bildschirmglas, ein Papierendlosmaterial oder eine Glaslinse unterschiedliche Anforderungen an die Fertigung und somit auch unterschiedliche Defektsignaturen.

Eine endgültige Bewertung, z.B. eine Gut-Schlecht-Entscheidung, erfolgt anhand der Klassifikation eines vorliegenden Einzeldefekts oder einer Folge von Defekten.

Die Aufgabe der Inspektion eines Gegenstandes besteht grundsätzlich darin, mit minimalen Mitteln, minimalem Aufwand und minimalen Regeln kostengünstig eine hinreichend effiziente, sichere und sachgerechte Begutachtung des zu untersuchenden Gegenstandes zu gewährleisten.

Ein Merkmal einer effizienten Inspektion ist es, relevante und irrelevante Signale und Ereignisse bzw. Defekte und Pseudo-Defekte frühzeitig zu erkennen und zu trennen und bestenfalls irrelevante Signale und Ereignisse gar nicht erst zu generieren.

Es ist also wesentlich, aus einer vorliegenden Flut von Daten die relevanten Ereignisse herauszufiltern und die Überzahl von irrelevanten Signalen und Ereignissen von der weiteren Verarbeitung auszuschließen. Hierbei kann ein Ausschlusskriterium, d.h. also das Ausbleiben eines spezifischen Merkmals, genauso wirksam und hilfreich sein wie der Nachweis eines defektspezifischen Merkmals selber. Als Beispiel hierfür sei das Ausbleiben eines Kantensignals aufgrund einer ausgebrochenen Kante bei einer Kanteninspektion oder bei einer geeignet aufgebauten Dunkelfeldanordnung das spezifische Fehlen eines Streulichtsignals im Fall eines bestimmten Defekttyps genannt.

Eine Optimierung der Inspektion kann im Einzelfall anhand der mechanischen und elektronischen Auslegung der Inspektionsanlage und der allgemeinen Abläufe, der Steuerung und der Prozessabfolge, der implementierten Signalfilter, der Erfassung und Katalogisierung der Ereignisse, deren Bewertung und Sortierung, anhand der Auslegung der eigentlichen Klassifikation und natürlich aus dem verbesserten Zusammenspiel mehrerer dieser Einzelkomponenten erfolgen.

Dabei erfolgt die Optimierung der Inspektion im Allgemeinen iterativ anhand der statistischen Auswertung der Inspektionsergebnisse von Referenzfehlermustern.

Sind die physikalischen Merkmale der unterschiedlich zu klassifizierenden Defekte bekannt, kann es möglich sein, durch einen entsprechend geeigneten Aufbau der Inspektionsanlage maßgeschneidert Kriterien bzw. Signale zur Unterscheidung der Defekte herauszuarbeiten. Beispielweise kann eine Transmissionsmessung mit unterschiedlichen Wellenlängen dazu dienen, unterschiedliche Farbfilter zu sortieren.

Typischerweise ist ein einziges Merkmal bzw. die Bestimmung eines einzigen Merkmals zur eineindeutigen Zuordnung bzw. Klassifikation eines Defekts nicht ausreichend, z.B. weil die Korrelation zwischen dem Merkmal und dem Defekttyp nicht vollständig und/oder die Mess- bzw. Nachweistechnik nicht hinreichend genau ist. Eine Kombination aus verschiedenen geeigneten Merkmalen kann die Zuordnung bzw. Klassifikation eines Defekts entscheidend verbessern.

Dabei werden in der Industrie bedingt durch Kosten Leistungsrechnungen der Inspektion Grenzen gesetzt. Eine eineindeutige 100%-ige Klassifikation wird deshalb nicht erwartet. Stattdessen werden eine hinreichende Lösung der Inspektionsaufgabe angestrebt und entsprechend geringe Abweichungen und Fehlklassifikationen toleriert bzw. bewusst akzeptiert.

Bei dem erfindungsgemäßen Verfahren werden mittels einer Hellfeldanordnung ein Hellfeldbild und mittels einer Dunkelfeldanordnung ein Dunkelfeldbild des zu untersuchenden Gegenstandes, insbesondere eines Bahnmaterials, wie z.B. eines Glasbandes oder einer Kunststofffolie, oder eines Stückgutes, wie z.B. einer Glasplatte oder eines Papierblatts, aufgenommen. Durch eine geeignete Überlagerung des Hellfeldbildes und des Dunkelfeldbildes, z.B. in einer Kamera oder während der Auswertung der Signale zweier getrennter Kameras, wird ein Auswertungsbild des Detektionsbereichs erzeugt und in diesem ggf. ein Defekt des Gegenstandes ermittelt. Anhand seiner Erscheinung in dem Auswertungsbild, insbesondere seiner Wertigkeit bzw. Wichtigkeit, Helligkeit, Farben oder Form, wird der Defekt mindestens einer vorbestimmten Defektklasse zugeordnet.

Der Begriff Dunkelfeldbild bezeichnet in der technischen Optik ein Bild, das mit einem Beobachtungssystem, z.B. einer Kamera oder einem Film, aufgenommen und mittels eines Beleuchtungssystems generiert wird, welches nicht direkt in das Beobachtungssystem einstrahlt. Erst eine Störung des Strahlengangs durch den beobachtenden Gegenstand bzw. an dem beobachteten Gegenstand lenkt Strahlung in das Beobachtungssystem ab. Somit wird ohne eine Störung ein Nullsignal bzw. Dunkelsignal gemessen. Es können also nur Hellsignale beobachtet werden.

Herkömmlicherweise wird eine Dunkelfeldanordnung gezielt zum Nachweis streuender Objekte genutzt. Beispiele hierfür sind Staubteilchen, Kratzer oder Fehlstellen auf Oberflächen, Rußpartikel in Gasströmungen und Flammen oder Blasen und Einschlüsse in Gläsern. Charakteristisch für eine herkömmliche Dunkelfeldanordnung ist daher eine möglichst diffuse, über möglichst viele Raumwinkel eingestrahlte Ausleuchtung des Beobachtungsfeldes und eine statistische, nicht vorherbestimmte Raumorientierung der zu beobachteten Objekte. Diese klassische Form der Dunkelfeldanordnung wird im Weiteren diffuses Dunkelfeld genannt und unterscheidet sich wesentlich von einem gerichteten Dunkelfeld, welches gemäß einer bevorzugten Ausführungsform der Erfindung verwendet wird.

Bei einer gerichteten Dunkelfeldanordnung wird mittels einer gerichteten Beleuchtung gezielt in einen definierten begrenzten Raumwinkelbereich eingestrahlt, und zumindest ein Teil der komplementären Raumorientierung wird mittels eines Photosensors mit begrenztem Öffnungsbereich abgefragt. Auch hier wird ohne Störung des Strahlengangs also ein Nullsignal bzw. Dunkelsignal gemessen.

Die gezielt abgefragte "Antwort" des Objekts kann entweder positiv, d.h. also als Hellsignal, oder negativ, d.h. also als Nullantwort, ausfallen, sie muss aber spezifisch mit der abgefragten Raumorientierung des Objekts korrelieren. Ein aus dem täglichen Leben bekanntes Beispiel hierfür ist das Aufblitzen einer Fensterscheibe im Sichtfeld eines Beobachters, sobald sich die Sonne, die Fensterscheibe und der Beobachter in einer definierten eindeutigen Position relativ zueinander befinden. Eine leichte Veränderung der Winkel bewirkt, dass der Beobachter den Lichtblitz des Sonnenreflexes nicht mehr wahrnehmen kann.

Der Beobachter erhält somit je nach Ausgang des Experiments entweder die Information, dass die vorbestimmte, klar definierte Raumkonstellation vorliegt oder gerade nicht vorliegt. Beide Antworten sind wertvoll und können in einer optischen Inspektionsanordnung gezielt und über einen definierten Raumwinkelbereich abgefragt und für eine Klassifikation genutzt werden. Diese Erkenntnis liegt der vorliegenden Erfindung als ein Hauptgedanke zugrunde.

Eine Analogie besteht zu der Messung der Polarisationsdrehung eines eingestrahlten Lichtstrahls bei der Ausrichtung eines Polfilters. Die beobachtete Lichtintensität in einer Polarisationsrichtung lässt bei Kenntnis des eingestrahlten Lichtbündels einen direkten Schluss auf die Drehrichtung des Polarisationsfilters zu.

Der Erfindung liegt des Weiteren die Erkenntnis zugrunde, dass unterschiedliche Arten von Defekten in einem Hellfeldbild und/oder in einem Dunkelfeldbild, erzeugt durch eine herkömmliche diffuse Dunkelfeldanordnung oder durch eine geeignete gerichtete Dunkelfeldanordnung, unterschiedlich in Erscheinung treten.

Beispielsweise bilden längliche Blasen in einem Glasband einen absorbierenden und räumlich inhomogen streuenden bzw. räumlich inhomogen reflektierenden Defekt. Physikalisch gesprochen ist der Streuquerschnitt bzw. der Reflektionsquerschnitt nicht homogen und konstant im Raum, sondern er besitzt eine ausgeprägte geometrische Winkelverteilung, die insbesondere durch das Material und durch die äußere Form und Ausrichtung des Defekts vorgegeben ist. Ein absorbierender und streuender Defekt lässt sich folglich als Schatten, d.h. als dunkles Objekt, in einem Hellfeldbild und als heller Fleck in einem durch diffuse ungerichtete Strahlung erzeugten Dunkelfeldbild erkennen. Durch eine geeignet ausgerichtete Dunkelfeldbeleuchtung kann dagegen unter Umständen das Streulicht des Defekts unterdrückt werden, d.h. die Ausrichtung des Defekts wird abgefragt. Beispielsweise kann die Spitze einer länglichen Glasblase deutlich weniger Streulicht in einer Kamera erzeugen als ihre Längsseite.

Ein Staubpartikel auf der Oberfläche eines Glasbandes bildet hingegen einen Defekt, der sowohl absorbiert als auch diffus streut. Im Hellfeldbild ist der Staubpartikel folglich als Schatten zu erkennen und unter Umständen schwer von einer kleinen Blase zu unterscheiden. Im diffusen Dunkelfeldbild und auch im gerichteten Dunkelfeldbild erscheint das Staubteilchen aufgrund seiner diffus streuenden Eigenschaften dagegen als ein heller Lichtfleck. Ein diffus streuendes Staubteilchen lässt sich somit anhand eines diffusen oder gerichteten Dunkelfeldbildes und unter zusätzlicher Auswertung eines entsprechenden Hellfeldbildes von einer länglich ausgerichteten Glasblase unterscheiden.

Weitere Objekte, die einen inhomogenen Streu- und/oder Reflexionsquerschnitt besitzen, sind beispielsweise gerichtete Kanten oder Facetten an Oberflächen, Zylinderlinsen als Körper, laminare Schlieren in Gasströmungen sowie Wirbel in Flüssigkeiten. Durch einen Vergleich von Hellfeldbild und Dunkelfeldbild lässt sich somit ermitteln, ob es sich bei einem detektierten Defekt um einen absorbieren Defekt und nicht gerichtet streuenden Defekt, wie z.B. eine längliche Blase oder einen Stein, oder um einen absorbierenden und diffus streuenden Defekt, wie z.B. ein Staubpartikel, handelt.

Weitere Merkmale wie Größe und Umriss des Defekts können selbstverständlich zusätzlich in die Detektion bzw. Klassifikation des Defekts mit einfließen. Die längliche Form und Ausrichtung einer ausgerichteten länglichen Blase in einem Hell- oder Dunkelfeldbild ergeben z.B. einen direkten geometrischen Hinweis auf die Klassifikation des Defekts und somit ein klares Unterscheidungskriterium gegenüber zufällig adsorbiertem unorientiertem Staub.

Die Auswertung von Hellfeldbild und Dunkelfeldbild in Kombination führt, unter Anwendung der oben angeführten Regeln, zu einer Zuordnung eines detektierten Defekts zu einer bestimmten Defektklasse. Eine verfeinerte Defektklassifikation anhand weiterer geeigneter Regeln ermöglicht wiederum eine weitere Unterscheidung verschiedenartiger Defekte, was letztlich in einer noch zuverlässigeren Defektdetektion resultiert.

Vorteilhafte Ausbildungen der Erfindung sind den Unteransprüchen, der Beschreibung und der Zeichnung zu entnehmen.

Gemäß einer Ausführungsform wird das Auswertungsbild durch eine rechnerische Überlagerung oder Weiterverarbeitung des Hellfeldbildes und des Dunkelfeldbildes erzeugt. Eine rechnerische Überlagerung des Hellfeldbildes und des Dunkelfeldbildes, d.h. also eine nachträgliche Überlagerung von Hellfeldbild und Dunkelfeldbild mit Hilfe einer Recheneinheit, ermöglicht es, das Hellfeldbild und das Dunkelfeldbild zeitversetzt mittels einer einzigen Kamera oder - gleichzeitig oder zeitversetzt - mittels zweier getrennter Kameras aufzunehmen, wodurch sich das Detektionsverfahren flexibler durchführen lässt. Außerdem bleiben bei einer nachträglichen Überlagerung von Hellfeldbild und Dunkelfeldbild die Rohbilddaten des Hellfeldbildes und des Dunkelfeldbildes erhalten, so dass sie jeweils für sich genommen zu weiteren Analysen herangezogen werden können.

Alternativ kann das Auswertungsbild durch eine direkte optische Überlagerung des Hellfeldbildes und des Dunkelfeldbildes erzeugt werden. Eine optische Bildüberlagerung lässt sich beispielsweise erreichen, indem das Hellfeldbild und das Dunkelfeldbild gleichzeitig mittels einer einzigen Kamera aufgenommen werden. Dies ist mit einem minimalen apparativen Aufwand realisierbar, sodass sich das Verfahren mit einem minimalen wirtschaftlichen Aufwand durchführen lässt.

Ein optisches Verfahren zur Verschränkung zweier Strahlengänge kann einen farbselektiven Spiegel oder im einfachsten Falle einen Teilerspiegel nutzen.

Eine direkte optische Überlagerung des Hellfeldbildes und des Dunkelfeldbildes in einer gemeinsamen Kamera kann im Vergleich zu einem unabhängigen Mehrkanalsystem zu einem Verlust an Bildinformation und/oder zu einer Verschlechterung der Bildqualität, insbesondere der Dynamik und der Eineindeutigkeit des Signals führen. Solange dieser Bildinformationsverlust bzw. diese Qualitätseinbuße das Regelwerk der Signalauswertung und Klassifikation nicht tangieren, beeinträchtigen sie das Ergebnis der Inspektion nicht.

Gemäß einer weiteren Ausführungsform werden bzw. wird das Hellfeldbild und/oder das Dunkelfeldbild des Detektionsbereichs mittels einer diffusen Beleuchtung erzeugt. Hierdurch wird das Detektionsverfahren unempfindlicher gegenüber lichtablenkenden Defekten, wie z.B. Verformungen der Oberflächen eines Glasbandes, die beispielsweise durch größere Blasen hervorgerufen werden können.

Vorteilhafterweise werden bzw. wird das Hellfeldbild und/oder das Dunkelfeldbild des Detektionsbereichs in Transmission aufgenommen, d.h. die Beleuchtungen zur Erzeugung des Hell- bzw. Dunkelfeldbildes sind auf einer der Kamera zur Aufnahme des Hell- bzw. Dunkelfeldbildes gegenüberliegenden Seite des zu untersuchenden Gegenstandes angeordnet. Die Bildaufnahme in Transmission trägt dazu bei, dass die Defektdetektion unempfindlicher gegenüber lichtablenkenden Defekten, insbesondere Unebenheiten der Oberflächen des zu untersuchenden Gegenstandes ist.

Alternativ ist es auch denkbar, dass das Hellfeldbild und/oder das Dunkelfeldbild des Detektionsbereichs in Reflexion aufgenommen werden bzw. wird, d.h. also dass die Beleuchtungen zur Erzeugung des Hell- bzw. Dunkelfeldbildes und eine Kamera zur Aufnahme des Hell- bzw. Dunkelfeldbildes auf der gleichen Seite des zu untersuchenden Gegenstandes angeordnet sind. Dies ermöglicht unter Umständen eine kompaktere Bauform der Vorrichtung, mit welcher das Detektionsverfahren durchgeführt wird. Außerdem können Defekte auf der kameraseitigen Oberfläche, wie z.B. Kratzer und Oberflächenausbrüche, im diffusen Dunkelfeld in Reflexion besonders deutlich hervortreten. Die Bildaufnahme in Reflexion trägt ferner dazu bei, dass die Defektdetektion empfindlicher gegenüber lichtablenkenden Defekten, insbesondere Unebenheiten der Oberflächen des zu untersuchenden Gegenstandes, ist.

Durch die erfindungsgemäße Detektionsvorrichtung (Anspruch 12) lassen sich die voranstehend genannten Vorteile entsprechend erreichen.

Gemäß einer bevorzugten Ausführungsform ist die oder jede Kamera zur Aufnahme des Hell- bzw. Dunkelfeldbildes eine Zeilenkamera. Die durch die Kamera aufgenommenen Bildzeilen können durch einen mit der Zeile verbundenen Bildprozessor zu einem flächigen Bild zusammengesetzt werden.

Eine derartige Kamera eignet sich besonders gut zur Detektion von Defekten in einem sich an der Detektionsvorrichtung vorbei bewegenden Bahnmaterial, wie z.B. einem Glasband oder einer Kunststofffolie, sodass die Detektionsvorrichtung auf einfache Weise in einen kontinuierlichen Durchlaufprozess, z.B. zur Herstellung des Bahnmaterials, integriert werden kann.

Ein flächiges Bild mit definiertem Koordinatensystem kann durch eine Synchronisierung des Kamerataktes mit dem Bahnvorschub des zu inspizierenden Materials erreicht werden. Mittels des Koordinatensystems werden auch getrennt aufgenommene Inspektionsbilder vergleichbar und verrechenbar.

Um eine besonders schnelle Defektdetektion und insbesondere eine vollständige Untersuchung des Bahnmaterials in einem einzigen Durchlauf durch die Detektionsvorrichtung zu ermöglichen, erstreckt sich der Abtastbereich der Kamera oder kombinierter Kameramodule vorzugsweise über die gesamte Breite des Detektionsbereichs und insbesondere über die gesamte Breite des Bahnmaterials.

Um eine hinreichende Ortsauflösung bei gegebener Inspektionsbreite zu erreichen, kann auch ein Mehrkamerasystem verwendet werden. Der Detektionsbereich wird in dieser Konfiguration segmentweise mit einem hinreichenden Überlappbereich aufgenommen.

Im Falle eines Mehrkamerasystems, welches aus einer Serie von Kameramodulen besteht, muss ein ausreichend breiter Überlappbereich zwischen optisch benachbarten Kameramodulen vorgesehen sein. Der gewählte Überlappbereich sollte mit Vorteil weiter als die maximale erwartete Defektgröße sein, um aufwendige Bildverarbeitungsaufgaben zu vermeiden.

Gemäß einer weiteren Ausführungsform weist die oder jede Kamera einen Array-Detektor auf. Anders als die Zeilenkamera, bei welcher sich das Hell- bzw. Dunkelfeldbild jeweils aus mehreren aufgenommenen Bildzeilen zusammensetzt, nimmt eine mit einem Array-Detektor ausgestattete Kamera von sich aus ein flächiges Bild auf, sodass hierbei grundsätzlich auf das rechnerische Zusammensetzen von einzelnen Bildzeilen zur Erstellung eines flächigen Bildes verzichtet werden kann. Je nach Größe und Orientierung des Array-Detektors kann es aber auch in diesem Fall erforderlich sein, das Gesamtbild aus einzelnen Bildsegmenten zusammenzusetzen.

Bevorzugt sind jedem Bildsegment eindeutig mindestens eine Kamerazeile bzw. -einheit und auch mindestens ein Beleuchtungselement zugeordnet. So umfasst eine Hellfeldanordnung sowohl eine entsprechende Kamera als auch mindestens eine zugeordnete Beleuchtung.

Vorteilhafterweise erstreckt sich die Hellfeldbeleuchtung über die Breite des Detektionsbereichs und insbesondere über die gesamte Breite des zu untersuchenden Gegenstandes. Dies trägt zu einer schnelleren Defektdetektion bei, indem sich der Gegenstand, z.B. das Bahnmaterial, in einem einzigen Durchlauf auf Defekte untersuchen lässt.

Um eine hinreichende Ausleuchtung bei gegebener Inspektionsbreite zu erreichen, können ggf. auch mehrere Beleuchtungsmodule genutzt werden. Der Detektionsbereich wird in dieser Konfiguration segmentweise und hinreichend überlappend ausgeleuchtet. Die Anzahl und Ausrichtung der Beleuchtungsmodule kann mit Vorteil, muss aber nicht, mit der Kameraanordnung korrespondieren.

Um eine gleichzeitige Ausleuchtung des Detektionsbereichs mit Hellfeldlicht und Dunkelfeldlicht zu erreichen, kann die Dunkelfeldbeleuchtung im Bereich wenigstens eines Längsendes der Hellfeldbeleuchtung angeordnet sein und das Dunkelfeldlicht von der Seite des zu untersuchenden Gegenstandes her in den Detektionsbereich einstrahlen.

Alternativ ist es aber auch möglich, eine länglich ausgebildete Dunkelfeldbeleuchtung vorzusehen, die sich vorzugsweise über die Breite des Detektionsbereichs und insbesondere über die gesamte Breite des Gegenstandes erstreckt und die - bevorzugt parallel zur Hellfeldbeleuchtung - neben der Hellfeldbeleuchtung, d.h. in Bewegungsrichtung des Gegenstandes gesehen vor und/oder hinter der Hellfeldbeleuchtung, angeordnet ist und unter einem Winkel von α > 0 relativ zur Hellfeldbeleuchtung einstrahlt. Mit Vorteil ist hierdurch eine kompakte kombinierte Beleuchtung mit den Eigenschaften einer Hell- und Dunkelfeldanordnung realisierbar. Bevorzugt sind die Hellfeldbeleuchtung und die Dunkelfeldbeleuchtung zu einer baulichen Einheit zusammengefasst, wodurch eine besonders kompakte Bauform der Detektionsvorrichtung möglich ist.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine schematische Seitenansicht einer erfindungsge- mäßen Vorrichtung zur Detektion eines Defekts in ei- nem Bahnmaterial;
- Fig. 2: eine schematische Vorderansicht der Vorrichtung von Fig. 1; und
- Fig. 3: ein schematische Darstellung eines durch eine Kamera der Vorrichtung von Fig. 1 aufgenommenen Auswer- tungsbildes.

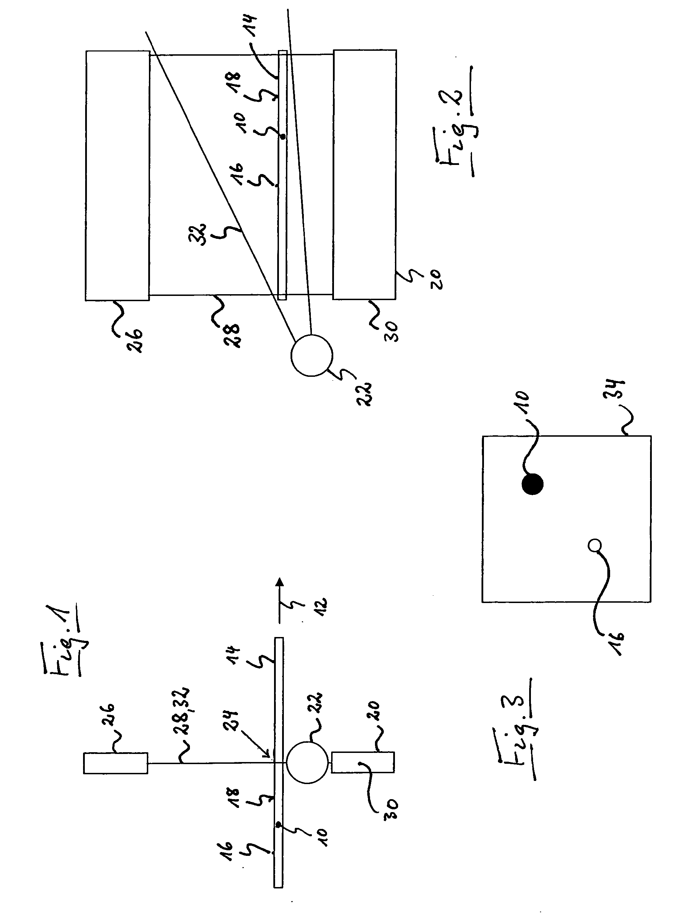

In Fig. 1 und 2 ist eine Vorrichtung zur Detektion von Defekten, z.B. kleinen Blasen oder Steinen 10, in einem sich in einer Richtung 12 durch die Vorrichtung hindurch bewegenden Glasband 14 dargestellt, welches beispielsweise durch einen Float- oder Fusion-Prozess hergestellt sein kann. Grundsätzlich lassen sich auch andere flächige Gegenstände, wie z.B. Glasscheiben, oder Bahnmaterialien, wie z.B. Kunststofffolien, durch die Vorrichtung auf Defekte untersuchen.

Bei der Herstellung bzw. beim Transport des Glasbandes 14 lässt sich normalerweise nicht vermeiden, dass sich Staubpartikel 16 auf der Oberfläche 18 des Glasbandes 14 anlagern. Die Staubpartikel 16 werden von der Vorrichtung ebenfalls als Defekte erkannt. Es ist aber leicht nachzuvollziehen, dass Staubpartikel 16 auf der Oberfläche 18 des Glasbandes 14 deutlich weniger kritische Defekte darstellen als Blasen oder Steine 10 in dem Glasband 14, da Staubpartikel 16 - im Gegensatz zu in das Glasmaterial eingebauten Blasen oder Steinen 10 - durch Abblasen oder Abspülen von dem Glasband 14 leicht entfernt werden können.

Zur Unterscheidung zwischen Blasen oder Steinen 10 und Staubpartikeln 16, d.h. also zwischen kritischen und unkritischen Defekten, sieht die Vorrichtung eine Kombination aus Hellfeldbeleuchtung 20 und gerichteter Dunkelfeldbeleuchtung 22 zur Ausleuchtung eines Detektionsbereichs 24 des Glasbandes 14 sowie eine Kamera 26 zur Beobachtung des ausgeleuchteten Detektionsbereichs 24 vor. Die Hellfeldbeleuchtung 20 und die gerichtete Dunkelfeldbeleuchtung 22 sind auf der der Kamera 26 gegenüberliegenden Seite des Glasbandes 14 angeordnet.

Die Hellfeldbeleuchtung 20 strahlt diffuses Licht 28 einer durch das Glasband 14 transmittierten Wellenlänge in Richtung der Kamera 26 aus, sodass das von der Hellfeldbeleuchtung 20 ausgestrahlte Licht 28 bei Durchgang eines defektfreien Abschnitts des Glasbandes 14 durch das Licht 28 von der Kamera 26 erfasst wird. Die Hellfeldbeleuchtung 20 weist eine längliche Gestalt auf und ist insbesondere eine Linienbeleuchtung, die sich rechtwinklig zur Bewegungsrichtung 12 des Glasbandes 14 über im Wesentlichen die gesamte Breite des Glasbandes 14 erstreckt.

Im Bereich eines Längsendes 30 der Hellfeldbeleuchtung 20 ist die Dunkelfeldbeleuchtung 22 angeordnet, welche einen Lichtstreifen 32 einer von dem Glasband 14 transmittierten Wellenlänge emittiert. Das Licht 32 der Dunkelfeldbeleuchtung 22 wird von der Seite des Glasbandes 14 her in den Detektionsbereich 14 eingestrahlt, und zwar mit einer Hauptabstrahlrichtung, die parallel zur Hauptabstrahlrichtung der Hellfeldbeleuchtung 20 und somit rechtwinklig zur Bewegungsrichtung 12 des Glasbandes 14 orientiert ist. Dabei trifft das Licht 32 der Dunkelfeldbeleuchtung 22 unter einem Winkel derart auf das Glasband 14, dass es zumindest zum überwiegenden Teil von dem Glasband 14 transmittiert wird, aber bei Durchgang eines defektfreien Abschnitts des Glasbandes 14 durch das Licht 32 nicht von der Kamera 26 erfasst wird.

Obwohl bei dem vorliegenden Ausführungsbeispiel nur eine Dunkelfeldbeleuchtung 22 vorgesehen ist, wird darauf hingewiesen, dass die Vorrichtung auch zwei Dunkelfeldbeleuchtungen 22 aufweisen kann, von denen die eine im Bereich des einen Längsendes 30 der Hellfeldbeleuchtung 20 und die andere im Bereich des gegenüberliegenden Längsendes der Hellfeldbeleuchtung 20 angeordnet ist.

Aufgrund der gleichzeitigen Ausleuchtung des Detektionsbereichs 24 durch die Hellfeldbeleuchtung 20 und die Dunkelfeldbeleuchtung 22 nimmt die den Detektionsbereich 24 beobachtende Kamera 26 eine Kombination aus Hellfeldbild und Dunkelfeldbild auf.

Das durch die Überlagerung von Hellfeldbild und Dunkelfeldbild entstehende und durch die Kamera 26 aufgenommene Kombinationsbild wird in diesem Kontext auch als Auswertungsbild bezeichnet und einer mit der Kamera 26 verbundenen (nicht gezeigten) Auswertungseinheit zur automatischen Bildauswertung zugeführt. Alternativ oder zusätzlich kann das von der Kamera 26 aufgenommene Auswertungsbild auch auf einem Bildschirm dargestellt und von einer mit der Defektdetektion betrauten Person ausgewertet werden.

Gemäß einer alternativen Ausführungsform können die Hellfeldbeleuchtung 20 und die Dunkelfeldbeleuchtung 22 abwechselnd getaktet betrieben werden, d.h. die Kamera 26 nimmt je nach Beleuchtung abwechselnd ein Hellfeldsignal und ein Dunkelfeldsignal des Detektionsbereichs 24 auf. Aus diesen Signalen können zwei einzelne zeitsynchrone Bilder extrahiert werden, so dass das Dunkelfeldbild und das Hellfeldbild auf diese Weise isoliert vorliegen.

Bei der Kamera 26 handelt es sich um eine Zeilenkamera, die eine Kamerazeile aufweist, welche mit dem Detektionsbereich 24 und folglich mit der Hellfeldbeleuchtung 20 ausgerichtet ist und sich im Wesentlichen rechtwinklig zur Bewegungsrichtung 12 des Glasbandes 14 über im Wesentlichen die gesamte Breite des Glasbandes 14 erstreckt. Die durch die Kamerazeile aufgenommenen Bildzeilen werden durch einen Bildprozessor zu einem flächigen Bild, dem Auswertungsbild, zusammengesetzt.

In Fig. 3 ist ein Ausschnitt 34 aus einem Auswertungsbild gezeigt, welches durch die Kamera 26 aufgenommen wurde, während sich das Glasband 14 an der Kamera 26 vorbei bewegte.

In dem Bildausschnitt 34 sind zwei Defekte zu erkennen, nämlich ein auf der Oberfläche 18 des Glasbandes 14 befindlicher Staubpartikel 16 und eine in dem Glasband 14 ausgebildete Blase 10, wobei es sich - wie bereits erwähnt - bei dem Defekt 10 auch um einen kleinen Stein handeln kann.

Die Blase 10 erscheint in dem Ausschnitt 34 des Auswertungsbildes als schwarzer Schatten, da sie das von der Hellfeldbeleuchtung 20 ausgestrahlte Licht 28 durch Absorption an einem Durchgang durch das Glasband 14 hindert und gleichzeitig weder eine Reflexion noch eine Streuung des Lichts 32 der Dunkelfeldbeleuchtung 22 in Richtung der Kamera 26 bewirkt.

Der Staubpartikel 16 erscheint bei einer geeigneten Wahl der Intensitäten und Abstrahlrichtungen der Hell- und Dunkelfeldbeleuchtungen in dem Auswertungsbild hingegen als ein heller Lichtpunkt, da der Staub aufgrund seiner diffus streuenden Eigenschaften sowohl das Licht 28 der Hellfeldbeleuchtung 20 als auch das Licht 32 der Dunkelfeldbeleuchtung 22 in Richtung der Kamera 26 streut.

Anhand seiner Helligkeit in dem Auswertungsbild lässt sich ein detektierter Defekt also entweder der Klasse der streuenden Defekte oder der Klasse der nicht streuenden und absorbierenden Defekte zuordnen. Diese Art der Defektklassifizierung ermöglicht - gegebenenfalls unter zusätzlicher Berücksichtigung der Form bzw. des Umrisses eines detektierten Defekts - also eine Bestimmung des Defekttyps und somit eine Unterscheidung unterschiedlicher Typen von Defekten.

### Bezugszeichenliste

- 10: Blase oder Stein
- 12: Bewegungsrichtung
- 14: Bahnmaterial
- 16: Staubpartikel
- 18: Oberfläche
- 20: Hellfeldbeleuchtung
- 22: Dunkelfeldbeleuchtung
- 24: Detektionsbereich
- 26: Kamera
- 28: Licht
- 30: Längsende
- 32: Licht
- 34: Bildausschnitt

## Patentansprüche

1. Verfahren zum Detektieren und Klassifizieren eines räumlich orientierten Defekts oder einer geometrisch ausgerichteten Struktur oder Oberfläche (10, 16) in einem Detektionsbereich (24) eines zu untersuchenden Gegenstandes (14), z.B. eines Bahnmaterials, bei dem
mittels einer Hellfeldanordnung ein Hellfeldbild und mittels einer Dunkelfeldanordnung ein Dunkelfeldbild des Detektionsbereichs (24) aufgenommen werden,
ein Auswertungsbild des Detektionsbereichs durch Überlagerung des Hellfeldbildes und des Dunkelfeldbildes erzeugt wird,
ein Defekt (10, 16) des Gegenstandes (14) in dem Auswertungsbild ermittelt wird und
der Defekt (10, 16) anhand seiner Erscheinung in dem Auswertungsbild einer von mindestens zwei vorbestimmten Defektklassen zugeordnet wird.

2. Verfahren nach Anspruch 1,
**dadurch gekennzeichnet, dass**
das Auswertungsbild durch eine rechnerische oder optische Überlagerung des Hellfeldbildes und des Dunkelfeldbildes erzeugt wird.

3. Verfahren nach Anspruch 1 oder 2,
**dadurch gekennzeichnet, dass**
das Hellfeldbild und das Dunkelfeldbild des Detektionsbereichs (24) gleichzeitig oder zeitversetzt aufgenommen werden.

4. Verfahren nach einem der vorstehenden Ansprüche,
**dadurch gekennzeichnet, dass**
das Hellfeldbild und das Dunkelfeldbild des Detektionsbereichs (24) mittels einer gemeinsamen Kamera (26) oder mittels verschiedener Kameras (26) aufgenommen werden.

5. Verfahren nach einem der vorstehenden Ansprüche,
**dadurch gekennzeichnet, dass**
das Hellfeldbild und/oder das Dunkelfeldbild des Detektionsbereichs (24) jeweils segmentweise mittels mehrerer Kameras (26) aufgenommen werden bzw. wird.

6. Verfahren nach einem der vorstehenden Ansprüche,
**dadurch gekennzeichnet, dass**
das Hellfeldbild und/oder das Dunkelfeldbild des Detektionsbereichs (24) jeweils mittels einer diffusen und/oder gerichteten Beleuchtung (22, 24) erzeugt werden bzw. wird.

7. Verfahren nach einem der vorstehenden Ansprüche,
**dadurch gekennzeichnet, dass**
das Hellfeldbild und/oder das Dunkelfeldbild des Detektionsbereichs (24) in Transmission und/oder in Reflexion aufgenommen werden bzw. wird.

8. Vorrichtung zur Detektion und Klassifikation eines Defekts (10, 16) in einem Detektionsbereich (24) eines zu untersuchenden Gegenstandes (14), z.B. eines Bahnmaterials, und insbesondere zur Durchführung eines Verfahrens nach einem der vorherigen Ansprüche, mit
einer Hellfeldbeleuchtung (20) zur Ausleuchtung des Detektionsbereichs (24),
einer Dunkelfeldbeleuchtung (22) zur Ausleuchtung des Detektionsbereichs (24),
einem Mittel (26) zur Aufnahme eines Hellfeldbildes des Detektionsbereichs (24),
einem Mittel (26) zur Aufnahme eines Dunkelfeldbildes des Detektionsbereichs (24) und
einem Mittel zur Erzeugung eines Auswertungsbildes durch Überlagerung des aufgenommenen Hell- und Dunkelfeldbildes.

9. Vorrichtung nach Anspruch 8,
**dadurch gekennzeichnet, dass**
das Mittel zur Aufnahme des Hellfeldbildes, das Mittel zur Aufnahme des Dunkelfeldbildes und das Mittel zur Erzeugung des Auswertungsbildes durch eine Kamera (26) gebildet ist oder dass das Mittel zur Aufnahme des Hellfeldbildes und das Mittel zur Aufnahme des Dunkelfeldbildes getrennte Kameras (26) sind und das Mittel zur Erzeugung des Auswertungsbildes eine mit den Kameras (26) verbundene Recheneinheit ist.

10. Vorrichtung nach Anspruch 8 oder 9,
**dadurch gekennzeichnet, dass**
die oder jede Kamera (26) eine Zeilenkamera ist oder die oder jede Kamera (26) einen Array-Detektor aufweist.

11. Vorrichtung nach einem der Ansprüche 8 bis 10,
**dadurch gekennzeichnet, dass**
die Hellfeldbeleuchtung (20) und/oder die Dunkelfeldbeleuchtung (22) auf einer den Mitteln (26) zur Aufnahme der Hell- bzw. Dunkelfeldbilder abgewandten Seite des zu untersuchenden Gegenstandes (14) angeordnet sind bzw. ist.

12. Vorrichtung nach einem der Ansprüche 8 bis 11,
**dadurch gekennzeichnet, dass**
die Hellfeldbeleuchtung (20) eine längliche Gestalt aufweist und insbesondere eine Linienbeleuchtung ist und/oder dass sich die Hellfeldbeleuchtung (20) über die Breite des Detektionsbereichs (24) und insbesondere über die gesamte Breite des zu untersuchenden Gegenstandes (14) erstreckt.

13. Vorrichtung nach einem der Ansprüche 8 bis 12,
**dadurch gekennzeichnet, dass**
die Dunkelfeldbeleuchtung (22) im Bereich wenigstens eines Längsendes (30) der Hellfeldbeleuchtung (20) angeordnet ist.

14. Vorrichtung nach einem der Ansprüche 8 bis 12,
**dadurch gekennzeichnet, dass**
die Dunkelfeldbeleuchtung (22) eine längliche Gestalt aufweist und insbesondere eine Linienbeleuchtung ist und/oder dass sich die Dunkelfeldbeleuchtung (22) über die Breite des Detektionsbereichs (24) und insbesondere über die gesamte Breite des zu untersuchenden Gegenstandes (14) erstreckt und/oder dass die Dunkelfeldbeleuchtung (22) parallel zur Hellfeldbeleuchtung (20) orientiert neben der Hellfeldbeleuchtung (20) angeordnet ist.

15. Vorrichtung nach einem der Ansprüche 8 bis 14,
**dadurch gekennzeichnet, dass**
die Hellfeldbeleuchtung (20) und die Dunkelfeldbeleuchtung (22) zu einer baulichen Einheit zusammengefasst sind.
